Europäisches Patentamt

European Patent Office

Office européen des brevets

(19)

(11) Veröffentlichungsnummer: **0 024 559**
**B1**

(12) **EUROPÄISCHE PATENTSCHRIFT**

(45) Veröffentlichungstag der Patentschrift: **18.01.84**

(21) Anmeldenummer: **80104453.8**

(22) Anmeldetag: **29.07.80**

(51) Int. Cl.³: **B 60 B 1/08**, B 60 B 27/00

(54) Radnabe, Verfahren zu deren Herstellung sowie ein Mittel zur Durchführung des Verfahrens.

(30) Priorität: **16.08.79 CH 7531/79**

(43) Veröffentlichungstag der Anmeldung:
**11.03.81 Patentblatt 81/10**

(45) Bekanntmachung des Hinweises auf die Patenterteilung:
**18.01.84 Patentblatt 84/3**

(84) Benannte Vertragsstaaten:
**AT BE DE FR GB IT LU NL SE**

(56) Entgegenhaltungen:
**BE - A - 425 090**
**FR - A - 2 404 540**
**GB - A - 292 844**
**GB - A - 1 339 601**
**US - A - 4 065 186**

(73) Patentinhaber: **GEORG FISCHER AKTIENGESELLSCHAFT**
**Mühlentalstrasse 105**
**CH-8201 Schaffhausen (CH)**

(72) Erfinder: **Mahnig, Fritz**
**Forstweg 13**
**CH-8200 Schaffhausen (CH)**
Erfinder: **Hecker, Heinz**
**Emil Beerli Strasse 13**
**D-4020 Mettmann (DE)**
Erfinder: **Rietzscher, Rolf**
**Brahmsstrasse 13**
**D-4020 Mettmann (DE)**
Erfinder: **Cramer, Bernd**
**Emil Beerli Strasse 17**
**D-4020 Mettmann (DE)**

Courier Press, Leamington Spa, England.

EP 0 024 559 B1

Radnabe, Verfahren zu deren Herstellung sowie ein Mittel zur Durchführung des Verfahrens

Die Erfindung betrifft eine Radnabe, insbesondere für Lastwagen, Zugwagen, Auflieger und Autobusse, mit den Markmalen des Oberbegriffs des Anspruchs 1. Eine derartige Radnabe ist aus der Patentschrift BG - A - 1339601 bekannt.

Ferner bezieht sich die Erfindung auf ein Verfahren zur Herstellung der Radnabe sowie auf ein Mittel zur Durchführung des Verfahrens.

Radnaben für hohe Belastung, beispielsweise an Lastwagen, Schlepper, Auflieger und Autobusse wurden bisher meistens geschmiedet, weil geeignete Giessverfahren nicht zur Verfügung standen. Geschmiedete Radnaben haben sich dabei als zuverlässig erwiesen, so dass bisher, wegen fehlender Giessverfahren, gegossene Radnaben praktisch nicht verwendet wurden.

Die aus Stahl geschmiedeten Radnaben sind relativ teuer herzustellen und relativ schwer. Sie weisen aber keine Bruchstellen an Steigern auf, so dass solche Probleme wegfallen. Die Bearbeitung von geschmiedeten Radnaben ist relativ einfach.

Aufgrund der bekannten Technik war es bisher üblich, die Speiser am äusseren Umfang der Radnabe anzuordnen. Beim Wegbrechen der Speiser entstanden muschelartige Einbrüche in der Metalloberfläche, welche Einbrüche nur durch eine zeitraubende Bearbeitung entfernt werden konnten, die zu hohen Kosten führten.

Aufgabe der Erfindung ist es, eine Radnabe, ein Verfahren zu deren Herstellung sowie ein Mittel zur Durchführung des Verfahrens zu schaffen, die Verbesserungen gegenüber dem Stand der Technik ermöglichen. Dabei soll eine Radnabe geschaffen werden, die nur wenige Bearbeitungskosten verursacht. Außerdem soll eine Schwächung der Nabe am umfang durch mögliche Metallausbrüche, die beim Wegbrechen der Speiser entstehen, verhindert werden.

Diese Aufgabe ist erfindungsgemäss mittels der Lehre gemäss dem gekennzeichneten Teil der Ansprüche 1 bis 3 gelöst. Ausführungsformen dieser Lehre sind in den weiteren, abhängigen Ansprüchen beschrieben.

Die so geschaffene Radnabe ist für eine bestimmte Radlast leichter als eine geschmiedete Ausführung.

Ferner ist die Radnabe mindestens so einfach zu bearbeiten, wie eine geschmiedete Ausführung.

Infolgedessen ist die so geschaffene Radnabe, allein wegen des Wegfalls von Material, billiger als die geschmiedete Ausführung.

Gemäss einer bevorzugten Ausführungsform ist die Radnabe aus Gusseisen mit Kugelgraphit hergestellt und kann deshalb nach Fertigstellung mit höchster Massgenauigkeit nachgerichtet werden.

Ein besonders grosser Vorteil ergibt sich dadurch, dass der Speiser im Inneren der Radnabe angeordnet ist, weil dadurch die Gefahr von Metallausbrüchen am Umfang vermieden wird und eine Bearbeitung solcher Bruchstellen nach dem Giessen wegfällt. Der kleinste Durchmesser an der Bruchstelle des Speisers kann dabei kleiner sein als derjenige der beidseits dieser Stelle gelegenen Aufnahmeflächen für die Lager.

Die gegossene Radnabe weist keine Lunker oder sonstige Schwachstellen auf.

Gemäss einer Ausführungsform kann die Radnabe mit Auflagestellen am Flansch versehen werden. Dadurch wird der Flächendruck zwischen dem Rad und dem Flansch erhöht und somit die Radbefestigung verbessert.

Die Radnabe ist vorzugsweise mit einem kreisförmig angeordneten Anschlag zur Zentrierung des Rades versehen.

Die Zentrierfläche kann durch Ausnehmungen unterbrochen sein, die sich in die Anlegefläche für das Rad hineinerstreckt, um das Lösen eines Rades von der Radnabe zu erleichtern.

Nachfolgend werden Ausführungsbeispiele des Gegenstandes der Erfindung anhand der Zeichnung näher erläutert. Es zeigen:

Fig. 1 einen Schnitt durch die Achse einer Radnabe gemäss einer bevorzugten Ausführungsform,

Fig. 2 eine Stirnansicht eines Teils der Radnabe nach Fig. 1 in Richtung des Pfeiles A, in kleinerem Massstab,

Fig. 3 einen Schnitt längs der Linie III—III in Fig. 2,

Fig. 4 einen der Fig. 1 entsprechenden Schnitt, wor dem Entfernen der Kernen, des Formstoffes und der Speiser,

Fig. 5 einen Schnitt längs der Linie V—V in Fig. 4,

Fig. 6 einen Schnitt längs der Linie VI—VI in Fig. 5, und

Fig. 7 eine Variante zum Einsatzkern nach Fig. 2, ohne Eingusssieb.

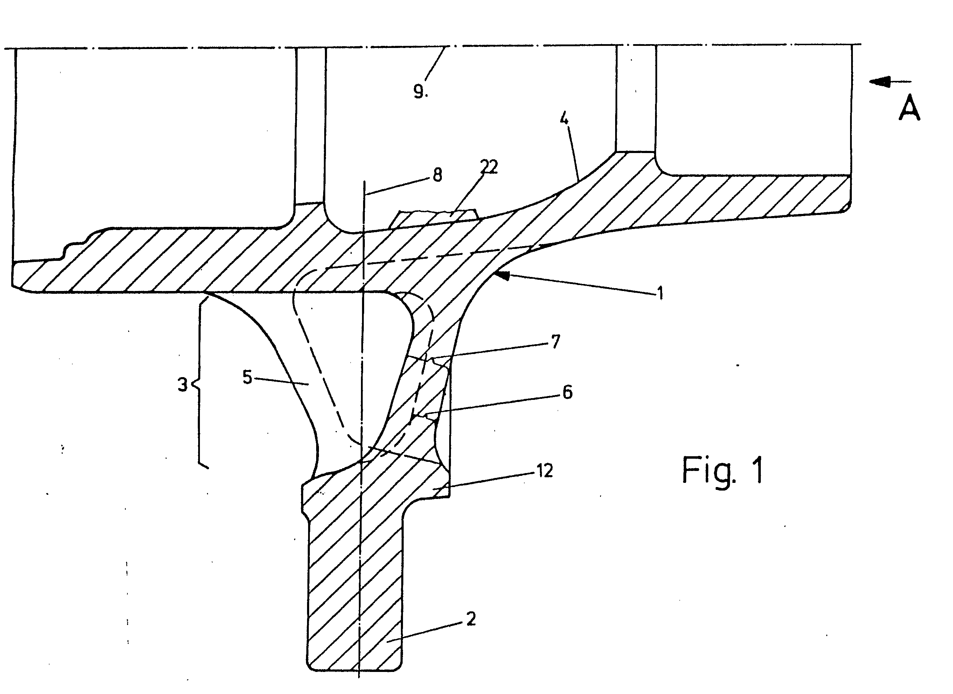

In Fig. 1 bis 3 ist eine bevorzugte Ausführungsform einer Radnabe 1 mit einem Flansch 2 zur Befestigung des Rades sowie einem Speichenteil 3 dargestellt, der den Flansch 2 mit der Nabe 4 verbindet. Der Speichenteil 3 besteht aus Speichenartigen, einstückig miteinander verbundenen Elementen 5, 6 und 7, die mit Ausnahme derjenigen 7 gleich dick sind. Alle Elemente 5, 6, 7 sind durch Wände 25 miteinander verbunden, so dass der Speichenteil 3 undurchlässig ist.

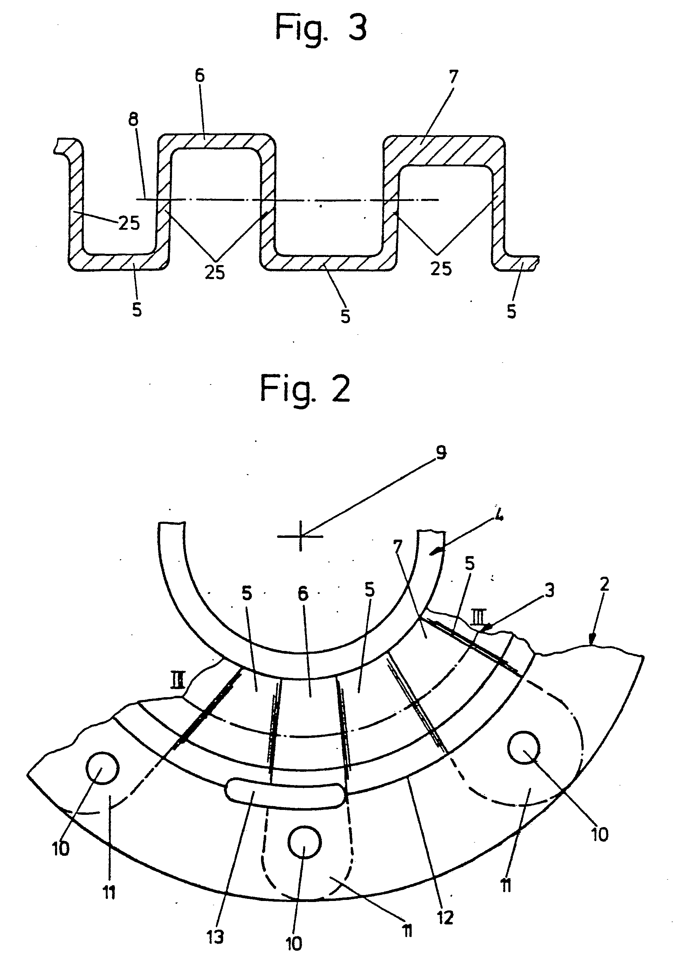

In Fig. 3 ist die Ausbildung des Speichenteils 3 dargestellt. Die beiden, der Radaussenseite zugekehrten Elemente 6 und 7 weisen aus speisungstechnischen Gründen eine unterschiedliche Dicke auf, wobei das Element 7 dicker als das Element 6 und desjenigen 5 ausgebildet ist. Rund um den Umfang der Radnabe 1 sind in der dergestellten Ausführung vier Elemente 7 des dickeren Typs vorgesehen. Es können aber auch nur drei oder mehr als vier, z.B. fünf oder sechs dieses Typs verwendet werden. Damit die Radnabe 1 nicht zu schwer und deshalb auch zu teuer wird, sind in der Regel möglichst wenige dicke Elemente 7 vorgesehen. Die Dicke des Elements 7 kann z.B. zweimal so dick wie die Elemente 5 und 6 ausgebildet sein.

Anstelle des geraden Verlaufes der Elemente 5, 6, 7 können sie auch bogen- bzw. kreisbogenförmig verlaufen.

Aus Fig. 1 geht hervor, dass die Elemente 5, 6, 7 etwa gleich weit von einer Ebene 8 durch die Mitte des Flansches 2, senkrecht zur Achse der Radnabe 1 verläuft. Dadurch ergeben sich grosse Festigkeitsvorteile der Radnabe. Wegen dieser Anordnung der Elemente 5, 6, 7 können sie viel dünner ausgelegt werden als bisherige Ausführungen, bei welchen der Speichenteil nur aus einer Scheibe besteht, die beispielsweise bei Kurvenfahrten viel stärker auf Biegung beansprucht wird. Zur Befestigung des Rades sind Löcher 10 vorgesehen, die von einer Anpressfläche 11 umgeben sein können. Wenn eine Anpressfläche 11 verwendet wird, kann das Rad besser an der Radnabe 1 befestigt werden. Andererseits ist die Bearbeitung der Befestigungsfläche für das Rad einfacher, wenn von speziell ausgebildeten Anpressflächen 11 abgesehen wird.

Bei Verwendung von Anpressflächen 11 müssen die Bereiche zwischen diesen Flächen dünner ausgebildet sein, so dass hier eine weitere Möglichkeit besteht, Material einzusparen.

Das nicht gezeigte Rad wird gegen den zur Radaussenseite vorspringenden Ring 12 zentriert. Bei derart montierten Räder kann es vorkommen, dess sich die Räder mit der Radnabe 1, z.B. infolge Rostbildung, verklemmen. Um auch in diesem Falle das Rad von der Radnabe 1 leicht lösen zu können, sind Ausnehmungen 13 rund um den Umfang der Radnabe vorgesehen. Diese Ausnehmungen 13 erstrecken sich unter der Radkante, so dass das Rad mittels eines passenden Werkzeuges von der Radnabe getrennt werden kann.

Die Frage, ob Anpressflächen 11 verwendet werden sollen oder nicht kann z.B. davon abhängen, welche Werkzeugmaschinen zur Bearbeitung des Flansches zur Verfügung stehen.

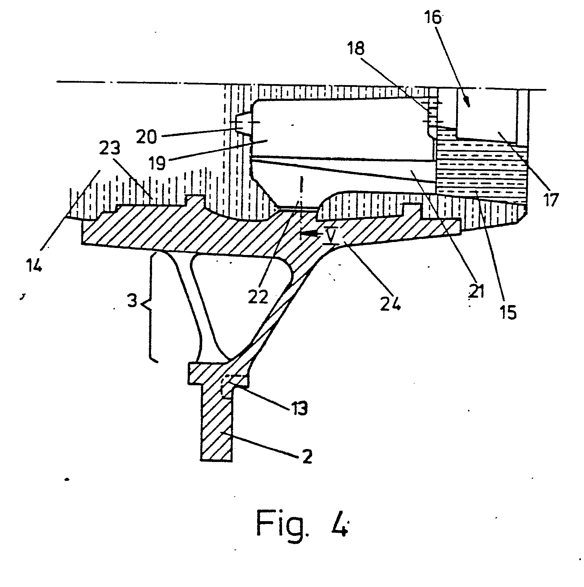

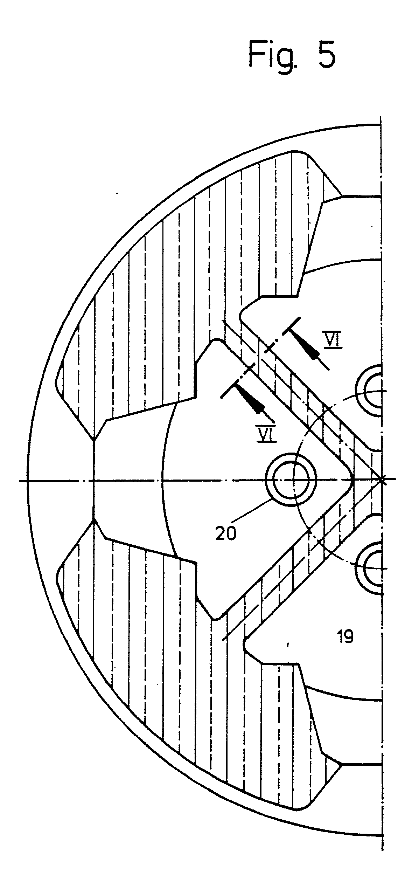

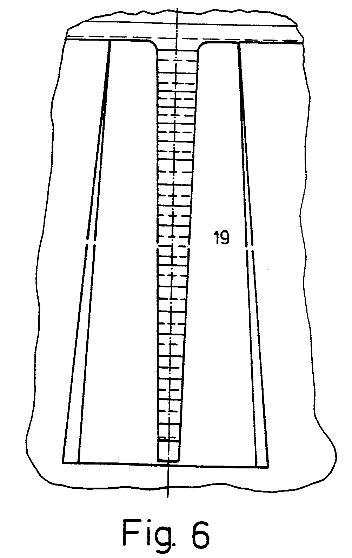

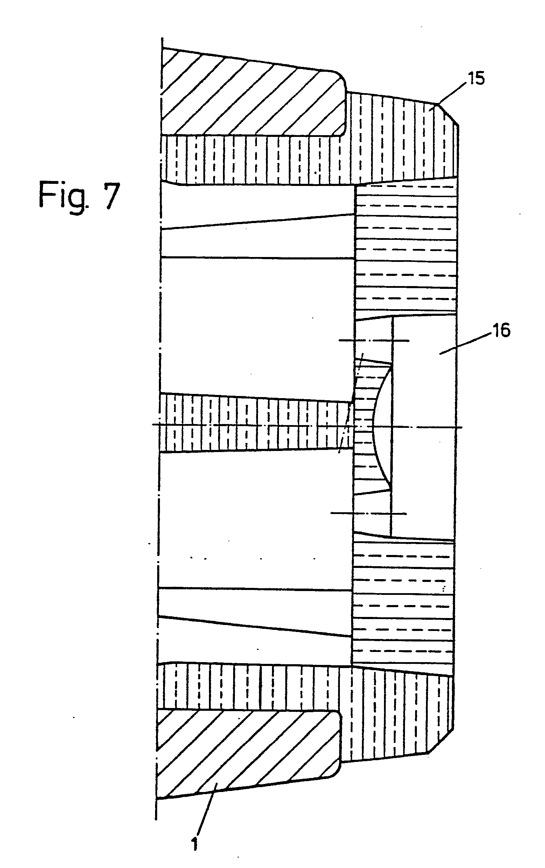

Die Einrichtung oder Mittel zur Durchführung des Verfahrens bzw. zum Giessen der Radnabe ist in den Fig. 4 bis 7 dargestellt.

Aus Fig. 4 geht hervor, dass mit Innenspeisung mit einem Hauptkern 14 und einem Einsatzkern 15 gearbeitet wird, welcher letztere einen Einguss 16 mit einer Kammer 17 für Legierungs bestandteile aufweist. Unterhalb des Eingusses 16 fliesst die Schmelze durch einen Siebkern 18 zu den im vorliegenden Fall vorgesehenen Kanälen 19 für die Speiser zum Hohlraum für die Radnabe. An den Verlängerungen dieser Kanälen bzw. Speiser 19 sind Zapfen 20 zum Wegschlagen der Speiser 19 nach Erstarren der Radnabe 1 angegossen.

Nach Entfernen des Kernsandes 21 zwischen den Speisern 19 können diese durch die so entstandenen Hohlräume entfernt werden.

Die Schmelze fliesst somit vom Einguss 16 durch den Speiser 19 zu den vier Auslaufstellen zur Radnabe und füllt die Nabe 4 den Speichenteil 3 und den Flansch 2. Dabei befinden sich die vier Elemente 7 an der Verlängerung der Auslaufstellen, so dass die Schmelze, wegen des relativ grossen Querschnittes dieser Elemente keine Mühe hat, den gesamten Flanschraum zu füllen.

Wenn die Radnabe 1 gegossen und erstarrt ist, werden zunächst der Kernsand 21 entfernt und dann die Speiser 19 mittels Hammerschläge auf die Zapfen 20 weggeschlagen. An den Verbindungsstellen zwischen Speiser 19 und Radnabe 1 entstehen dabei Bruchstellen 22, die aber nicht weiter bearbeitet werden müssen, weil sie auf einen grösseren Innendurchmesser der als die Lagerflächen und der grösste Auslassdurchmesser der Radnabe verlegt werden können und somit weder die Drehbewegung der Radnabe 1 bezüglich der Achse, noch die Montage der Radlager an den Stellen 23 und 24 beeinträchtigen. Infolgedessen kann der Speiser näher an das zu speisende Wärmezentrum der Nabe herangeführt werden. Dabei hat die Erfahrung gezeigt, dass eine Bearbeitung der Bruchstellen absolut nicht erforderlich ist. Die Aufteilung der Strömung der Schmelze in vier Teilströmen mit ebenfalls vier dickeren Elementen 7 stellt nur eine Möglichkeit dar. Es können aber statt dessen nur drei oder auch fünf oder mehr Teilströme mit einer entsprechenden Anzahl solcher Elementen 7 vorgesehen werden.

Die in der beschriebenen Art und Weise hergestellte Radnabe besitzt gegenüber bekannten Ausfuhrungen unter anderem folgende Vorteile:

— kleineres Gewicht
— preisgünstigere Herstellung
— hohe Standfestigkeit der Radnabe
— bessere Stabilität
— höhere Genauigkeit
— kleinere Abweichungen von der Radialebene
— hohes Widerstandsmoment bei Belastung schräg zur Radnabe
— keine Nachbearbeitung der Bruchstellen zwischen Speiser und Radnabe erforderlich.

In einem speziellen Fall wurde ein Gewichtsersparnis von über 15 % gegenüber einer bekannten Ausführung erreicht.

Als Material für die Radnabe kommen z.B. die folgenden in Frage:

— Gusseisen mit Kugelgraphit, z.B. GGG 50, 42 oder 40, oder
— Leichtmetall

**Patentansprüche**

1. Radnabe, insbesondere für Lastwagen, Zugwagen, Auflieger und Autobusse, mit einer Nabe (4), einem Speichenteil (3) und einem Flansch (2) zur Befestigung des Rades, wobei der Speichenteil (3) einzelne Elemente (5, 6, 7) aufweist, die durch Wände (25) miteinander verbunden sind und sich die einzelnen Elemente (5, 6, 7) vom Flansch (2) weg abwechslungsweise zur inneren und äusseren Radseite der Nabe (4) erstrecken, dadurch gekennzeichnet, dass auf der Naben-Innenfläche zwischen deren Lagerflächen mindestens zwei Speiser-Bruchstellen (22) vorhanden sind.

2. Verfahren zur Herstellung der Radnabe nach Anspruch 1 durch Giessen, dadurch gekennzeichnet, dass die Schmelze an mindestens zwei Stellen an der Innenfläche der Nabe zwischen deren Lagerflächen über Speiser (19) zugeführt wird, wobei die Stellen in einer grösseren Entfernung von der Radachse liegen als die Stützflächen für die Radlager.

3. Mittel zur Durchführung des Verfahrens nach Anspruch 2, dadurch gekennzeichnet, dass sie einen auf der Radinnenseite in der Nabenbohrung angeordneten Hauptkern (14) und einen auf der Radaussenseite in der Nabenbohrung angeordneten Einsatzkern (15) einschliessen, der mit Kanälen (19) zur Zufuhr der Schmelze versehen ist.

4. Radnabe nach Anspruch 1, dadurch gekennzeichnet, dass die Speiserbruchstellen unbearbeitet sind.

5. Radnabe nach Anspruch 1, dadurch gekennzeichnet, dass die Elemente (5, 6, 7) und die Wände (25), in der Abwicklung eines Umfangsschnittes durch den Speichenteil (3) im wesentlichen parallel zur Achse (9), in der Form einer Welle verlaufen.

6. Radnabe nach Anspruch 5, dadurch gekennzeichnet, dass der Wellenverlauf in einer rechtwinklig gebrochenen Linie erfolgt.

7. Radnabe nach Anspruch 5, dadurch gekennzeichnet, dass die Welle sinusförmig verläuft.

8. Radnabe nach Anspruch 5, dadurch gekennzeichnet, dass die Höhen und die Täler der Welle spitz zulaufen.

9. Radnabe nach Anspruch 5, dadurch gekennzeichnet, dass die Wände (25) axial verlaufen.

10. Radnabe nach Anspruch 1, dadurch gekennzeichnet, dass sie aus Gusseisen mit Kugelgraphit besteht.

11. Radnabe nach Anspruch 10, dadurch gekennzeichnet, dass sie aus dem Werkstoff GGG 50 besteht.

12. Radnabe nach Anspruch 1, dadurch gekennzeichnet, dass sie aus Leichtmetall besteht.

13. Radnabe nach Anspruch 1, dadurch gekennzeichnet, dass der Flansch (2) einen Zentrierring (12) für das Rad aufweist.

14. Radnabe nach Anspruch 1, dadurch gekennzeichnet, dass sie eine Ausnehmung (13) zum Wegpressen des Rades vom Flansch (2) aufweist.

15. Radnabe nach Anspruch 14, dadurch gekennzeichnet, dass sich die Ausnehmung (13) in den Flansch (2) und teilweise in den Zentrierring (12) hinein erstreckt.

16. Verfahren nach Anspruch 2, dadurch gekennzeichnet, dass man die Schmelze an vier oder mehr Stellen zuführt.

17. Mittel nach Anspruch 3, dadurch gekennzeichnet, dass sie einen Siebkern einschliessen.

**Revendications**

1. Moyeu de roue, spécialement pour camions, tracteurs, semi-remorques et autobus ou autocars, comportant un moyeu (4), une partie de rayons (3) et un flasque (2) pour la fixation de la roue, la partie de rayons (3) comportant différents éléments (5, 6, 7), qui sont reliés entre eux par des parois (25), ces différents éléments (5, 6, 7) s'éloignant du flasque (2) alternativement vers les côtés de roue du moyeu (4) intérieur et extérieur, caractérisé en ce que, sur la surface intérieure de moyeu et entre ses surfaces d'appui il y a au moins deux points de rupture (22) de masselottes.

2. Procédé pour la fabrication du moyeu de roue suivant la revendication 1 par coulée, caractérisé en ce que la coulée est amenée en au moins deux points sur la surface intérieure du moyeu, entre ses portées, par l'intermédiaire de masselottes (19), ces points étant plus espacés de l'axe de roue que les surfaces de soutien des roulements de roue.

3. Moyens pour l'exécution du procédé suivant la revendication 2, caractérisés en ce qu'ils comprennent un noyau principal (14), disposé sur le côté intérieur de la roue, dans l'alésage de moyeu et un noyau d'insertion (15), disposé sur le côté extérieur de la roue, dans l'alésage du moyeu, ce dernier moyeu étant muni de canaux (19) pour l'arrivée de la coulée.

4. Moyeu de roue suivant la revendication 1, caractérisé en ce que les points de rupture des masselottes ne sont pas usinés.

5. Moyeu de roue suivant la revendication 1, caractérisé en ce que les éléments (5, 6, 7) et les parois (25) ont, dans une section périphérique de la partie de rayons (3), la forme d'une ondulation, essentiellement parallèlement à l'axe (9).

6. Moyeu de roue suivant la revendication 5, caractérisé en ce que l'allure d'ondulation a la forme d'une ligne brisée à angle droit.

7. Moyeu de roue suivant la revendication 5, caractérisé en ce que l'ondulation est sinusoïdale.

8. Moyeu de roue suivant la revendication 5, caractérisé en ce que les sommets et les creux de l'ondulation sont pointus.

9. Moyeu de roue suivant la revendication 5, caractérisé en ce que les parois (25) sont axiales.

10. Moyeu de roue suivant la revendication 1, caractérisé en ce qu'il est en fonte à graphite sphéroïdal.

11. Moyeu de roue suivant la revendication 10, caractérisé en ce qu'il est en matière GGG 50.

12. Moyeu de roue suivant la revendication 1, caractérisé en ce qu'il est en alliage léger.

13. Moyeu de roue suivant la revendication 1, caractérisé en ce que le flasque (2) présente un anneau de centrage (12) pour la roue.

14. Moyeu de roue suivant la revendication 1, caractérisé en ce qu'il présente un évidement (13) pour que la roue puisse être enlevée du flasque (2).

15. Moyeu de roue suivant la revendication 14, caractérisé en ce que l'évidement (13) s'étend dans le flasque (2) et en partie dans l'anneau de centrage (12).

16. Procédé suivant la revendication 2, caractérisé en ce qu'on amène la coulée en quatre points ou plus.

17. Moyeu suivant la revendication 3, caractérisés en ce qu'ils renferment un noyau de coulée, perforé.


## Claims

1. Wheel hub, in particular for lorries, traction engines, load bearers and buses, with a hub (4), a spoke part (3) and a flange (2) for securing the wheel, whereby the spoke part (3) has individual elements (5, 6, 7) which are connected to one another by walls (25) and the individual elements (5, 6, 7) extend away from the flange (2) alternately towards the inner and outer wheel side of the hub (4), characterised in that on the hub-inner surface between their bearing surfaces there are at least two feed-break points (22).

2. Process for the production of the wheel hub according to claim 1 by casting, characterised in that the melt is fed via feeders (19) to at least two points on the inner surface of the hub between their bearing surfaces, and the points are at a greater distance from the wheel axis than the supporting surfaces for the wheel bearings.

3. Means for carrying out the process according to claim 2, characterised in that they include a main core (14) disposed on the inner side of the wheel in the hub bore, and an inserted core (15) disposed on the outer side of the wheel in the hub bore, which core is provided with ducts (19) for feeding the melt.

4. Wheel hub according to claim 1, characterised in that the feed-break points are unworked.

5. Wheel hub according to claim 1, characterised in that the elements (5, 6, 7) and the walls (25), in the development of a section of the circumference through the spoke part (3) substantially parallel to the axis (9), are in the form of a wave.

6. Wheel hub according to claim 5, characterised in that the path of the wave is a line broken at right angles.

7. Wheel hub according to claim 5, characterised in that the wave has a sinusoidal curve.

8. Wheel hub according to claim 5, characterised in that the peaks and the troughs of the wave taper.

9. Wheel hub according to claim 5, characterised in that the walls (25) run in an axial direction.

10. Wheel hub according to claim 1, characterised in that it consists of cast iron with nodular graphite.

11. Wheel hub according to claim 10, characterised in that it consists of the material GGG 50.

12. Wheel hub according to claim 1, characterised in that it consists of light metal.

13. Wheel hub according to claim 1, characterised in that the flange (2) has a centering ring (12) for the wheel.

14. Wheel hub according to claim 1, characterised in that it has a recess (13) for pressing the wheel away from the flange (2).

15. Wheel hub according to claim 14, characterised in that the recess (13) extends into the flange (2) and partially into the centering ring (12).

16. Process according to claim 2, characterised in that the melt is fed to four or more points.

17. Means according to claim 3, characterised in that they include a filter core.

Fig. 1

# Fig. 3

# Fig. 2

2

Fig. 4

# Fig. 5

Fig. 6

Fig. 7